# FASCICULE DE BREVET EUROPEEN

(11) **EP 2 135 784 B1**
(45) Date de publication et mention de la délivrance du brevet: **23.02.2011**
(21) Numéro de dépôt: 09155522.7
(22) Date de dépôt: 18.03.2009
(51) Int. Cl.: B60T 11/236

(54) **Maître-cylindre à course morte réduite**
Hauptzylinder mit reduziertem Leerhub
Master cylinder with reduced free travel

(30) Priorité: 21.05.2008 FR 0802842
(43) Date de publication de la demande: 23.12.2009
(73) Titulaire: Robert Bosch GmbH, 70442 Stuttgart (DE)
(72) Inventeur: Auguste, Antony, 94350 Villier Sur Marne (FR); Bernadat, Olivier, 94170 Le Perreux (FR); Lhuillier, Laurent, 93150 Le Blanc Mesnil (FR); Gaffe, François, 93140 Bondy (FR); Charpentier, Carole, 95160 Montmorency (FR)
(74) Mandataire: Hurwic, Aleksander Wiktor

(56) Documents cités:
- DE-B3-102006 022 551
- US-B1- 6 272 858

## Description

La présente invention se rapporte à un maître cylindre à course morte réduite. Plus particulièrement l'invention se rapporte à un piston de maître cylindre et à un maître cylindre comportant un piston selon l'invention.

Les systèmes de freinage actuels comportent généralement un maître cylindre. De tels maîtres cylindres comportent un corps de maître cylindre. Dans ce corps de maître cylindre est réalisé une chambre de pression. La chambre de pression forme un alésage à l'intérieur du corps du maître cylindre. Un piston est monté coulissant dans l'alésage formé par la chambre de pression. Le piston et l'alésage sont de forme complémentaire. Typiquement le piston et l'alésage sont de forme cylindrique. Le piston a alors un diamètre inférieur et proche du diamètre de l'alésage.

La chambre de pression est alimentée en liquide de frein, ou plus généralement en fluide hydraulique, par un réservoir de fluide hydraulique. La chambre de pression est reliée au réservoir de fluide hydraulique via un conduit d'alimentation de fluide hydraulique. Le conduit d'alimentation est réalisé dans le corps du maître cylindre. Une sortie du conduit d'alimentation est en vis à vis du piston. Un orifice est réalisé dans le piston afin de permettre au fluide hydraulique de circuler depuis le conduit d'alimentation jusque dans la chambre de pression.

Un maître cylindre alimente en fluide hydraulique un circuit hydraulique. Pour cela, la chambre de pression comporte une sortie de fluide hydraulique. Ladite sortie est réalisée dans un fond de la chambre de pression. Cette sortie est directement reliée au circuit hydraulique. Pour alimenter le circuit en fluide hydraulique, la pression dans la chambre de pression doit augmenter. L'augmentation de la pression dans la chambre de pression évacue le fluide hydraulique contenu dans ladite chambre de pression par les sorties d'alimentation du circuit hydraulique. Le fluide expulsé hors de la chambre de pression par la montée en pression est injecté dans le circuit hydraulique.

Lors d'un freinage, le piston se déplace dans l'alésage du corps de maître cylindre. Ce déplacement réduit la taille, et donc la capacité de stockage de fluide hydraulique, de la chambre de pression. Par ailleurs, ce déplacement ferme l'alimentation en fluide hydraulique de la chambre de pression. En effet en se déplaçant, l'orifice réalisé dans le piston est en vis à vis d'une paroi interne de l'alésage et le conduit d'alimentation en vis à vis d'une paroi extérieure du piston. Cependant, pour augmenter la pression du fluide hydraulique dans la chambre de pression la fermeture de l'alimentation en fluide hydraulique de la chambre de pression doit être étanche.

Pour assurer l'étanchéité, et donc la montée en pression dans la chambre de pression, une gorge est réalisée dans l'alésage du corps du maître cylindre. Cette gorge est située de telle sorte qu'en position de travail, c'est à dire durant un déplacement du piston dans l'alésage, l'orifice réalisé dans le piston soit situé soit en vis à vis de ladite gorge, soit plus éloigné du conduit d'alimentation que ladite gorge.

Un coupelle d'étanchéité est placé dans la gorge. Cette coupelle joue le rôle de joint d'étanchéité. Une telle coupelle a pour fonction d'assurer l'étanchéité de la fermeture de la communication entre la chambre de pression et le conduit d'alimentation. Pour cela, la coupelle n'est que partiellement logée dans la gorge. Plus particulièrement, une partie de la coupelle ressort de la gorge pour venir au contact du piston. Ce contact doit assurer l'étanchéité entre le conduit d'alimentation et l'orifice du piston lorsque le piston est en position de travail. En position de travail, la partie du joint qui ressort de la gorge est située soit en vis à vis de l'orifice du piston, de manière a boucher ledit orifice, soit en contact avec une paroi extérieure du piston plus proche du conduit d'alimentation que ledit orifice du piston. Cette localisation de la coupelle bloque la circulation du fluide hydraulique entre l'orifice du piston et le conduit d'alimentation de manière étanche.

La coupelle a généralement la forme d'une couronne ayant un profil en forme de U. Le profil en forme de U comporte une base et deux lèvres. Une lèvre, dite lèvre intérieure, est collée contre la paroi extérieure du piston. Une lèvre, dite lèvre extérieure, est collée contre un fond de la gorge. Le contact entre le piston et la lèvre intérieure est étanche. Le contact ente le fond de la gorge et la lèvre extérieure est étanche.

Lorsque le piston coulisse, suivant un axe de déplacement du piston, jusqu'à ce que la lèvre intérieure soit en vis à vis de l'orifice du piston ou que la lèvre intérieure soit plus proche du conduit d'alimentation que l'orifice du piston, la coupelle obstrue de manière étanche l'alimentation en fluide de la chambre de pression. Cette obstruction permet, dans le cas ou le piston continue d'avancer dans le maître cylindre, une montée en pression dans la chambre de pression. La montée en pression permet d'alimenter en fluide hydraulique le circuit hydraulique. Cette alimentation se fait en injectant le fluide hydraulique contenu dans la chambre dans le circuit hydraulique. L'alimentation en fluide hydraulique d'un circuit hydraulique de freinage permet le freinage.

Durant un freinage, l'orifice du piston parcours une certaine distance, aussi appelée course morte, avant d'être en vis à vis de la lèvre intérieure ou plus éloigné du conduit d'alimentation que la lèvre intérieure. La non communication entre le conduit d'alimentation et la chambre de pression n'est pas étanche durant la course morte. L'absence d'étanchéité durant cette course morte ne permet pas à la pression de monter dans la chambre de pression. L'absence de montée en pression dans la chambre de pression n'autorise pas le freinage. Durant la course morte, un utilisateur d'un dispositif de freinage appui sur une pédale de frein sans qu'il y ait de freinage effectif.

Afin de limiter ou supprimer la course morte, il est possible de placer l'orifice au plus proche de la lèvre intérieure de la coupelle. L'orifice n'est alors pas en vis à vis du conduit d'alimentation. Cependant, si l'orifice du piston n'est pas en vis à vis du conduit d'alimentation en position de repos, le débit de fluide hydraulique alimentant la chambre de pression peut être insuffisant. En effet le liquide présent dans la chambre de pression et envoyé dans le circuit hydraulique lors d'un freinage n'est pas remplacé rapidement si l'orifice du piston n'est pas en vis à vis du conduit d'alimentation. II est possible d'avancer l'orifice de manière à ce que ledit orifice ne soit que partiellement en vis à vis du conduit d'alimentation. Ce vis à vis partiel est tel qu'il assure un débit suffisant pour remplir la chambre de pression rapidement tout en réduisant la course morte. Cependant, un tel vis à vis partiel conserve une course morte importante.

II est connu , par exemple de DE 10 2006 022 551 ou de US 6,272,858, des dispositifs de maître cylindre permettant de réduire la course morte et de permettre au freinage d'être plus réactif par rapport à l'appui sur la pédale de l'utilisateur. Ainsi dans le brevet US 6,272,858, il est connu des dispositifs de freinage comportant un piston ayant une partie tronconique. La partie tronconique forme alors une paroi inclinée par rapport à un axe de déplacement du piston. L'orifice du piston est alors situé sur ladite paroi inclinée. La paroi inclinée est telle que le diamètre externe du piston, c'est à dire le diamètre du piston en dehors de la partie tronconique, est supérieur ou égal au diamètre du piston au niveau de la partie tronconique. Un écart est alors présent entre une paroi interne de l'alésage et le piston au niveau de cette partie tronconique.

L'orifice du piston n'a alors plus a être en vis à vis du conduit d'alimentation. En effet, l'orifice du piston étant situé sur la paroi inclinée, si le conduit d'alimentation est en vis à vis, même partiel, de la partie tronconique, l'écart entre une paroi interne de l'alésage délimitant le conduit d'alimentation et la paroi inclinée permet le passage du fluide hydraulique. Selon l'inclinaison de la paroi inclinée par rapport à l'axe de déplacement du piston et selon l'écart entre la paroi inclinée et la paroi interne de l'alésage délimitant le conduit d'alimentation, un débit suffisant pour remplir efficacement la chambre de pression peut être fourni malgré l'absence de vis à vis entre l'orifice du piston et le conduit d'alimentation.

Cependant, une telle partie tronconique, si elle permet de réduire grandement la course morte, crée une zone de jonction formant une rupture du diamètre du piston. Cette rupture peut empêcher un contact totalement étanche entre la lèvre intérieure et le piston. Lorsque la lèvre intérieure est appuyée sur la zone de jonction, une première partie de la lèvre intérieure est appuyée sur la paroi inclinée, mais la rigidité de ladite lèvre intérieure empêche une deuxième partie de la lèvre intérieure d'être en contact avec le diamètre extérieur du piston. La lèvre intérieure n'est alors que partiellement en contact avec le piston. le contact partiel de la lèvre intérieure avec le piston crée une faiblesse d'étanchéité pouvant empêcher la lèvre intérieure de remplir correctement son rôle de joint d'étanchéité. Si l'étanchéité n'est plus assurée, la pression dans la chambre de pression ne peut plus augmenter correctement. Un défaut d'alimentation du circuit hydraulique et donc un défaut de freinage peut avoir lieu.

Une telle solution ne permet donc pas de réduire la course morte de manière importante tout en conservant un niveau d'étanchéité et de débit suffisant pour assurer le bon fonctionnement du maître cylindre. Cette solution n'est donc pas acceptable en l'état.

Le dispositif selon l'invention prévoit de réduire la course morte de manière importante tout en assurant une étanchéité parfaite. Pour cela le dispositif selon l'invention prévoir un piston de maître cylindre comportant une paroi inclinée. La paroi inclinée selon l'invention forme une surface courbe convexe. L'orifice du piston est situé en entier sur ladite surface courbe convexe. La présence de la paroi inclinée permet d'assurer un débit suffisant pour remplir la chambre de pression alors que l'orifice du piston n'est pas situé en vis à vis du conduit d'alimentation. La paroi inclinée étant courbe et convexe, la lèvre intérieure reste, en tout point de ladite lèvre intérieure en vis à vis du piston, en contact avec le piston lors d'un freinage. Un tel contact assure une étanchéité apte à garantir une montée en pression efficace dans la chambre de pression. Un décollement d'une partie de la lèvre est évité par la courbure convexe de la paroi inclinée.

L'invention a donc pour objet un maître cylindre de frein comportant, depuis une pédale de frein jusqu'à un fond du maître cylindre, un corps de maître cylindre, ledit corps de maître cylindre comportant une chambre délimitant un alésage du corps du maître cylindre, un piston coulissant dans l'alésage sur un axe, un réservoir de liquide hydraulique alimentant la chambre par l'intermédiaire d'un orifice dans le piston et d'un conduit d'alimentation dans le corps de maître cylindre, une coupelle d'étanchéité, la coupelle d'étanchéité étant en contact par une lèvre intérieure avec la périphérie du piston, et par une lèvre extérieure avec le corps du maître cylindre, ledit orifice étant soit en vis à vis de ladite lèvre intérieure soit plus éloigné, selon une position en déplacement du piston sur un axe de déplacement dudit piston, du conduit d'alimentation que la lèvre intérieure lors d'un freinage, le piston comporte une partie tronconique, la partie tronconique du piston est formée par une paroi inclinée par rapport à un axe de déplacement du piston, ladite paroi inclinée forme une surface courbe convexe incurvée depuis un diamètre extérieur du piston jusqu'à un diamètre inférieur au diamètre externe du piston, caractérisé en ce que ladite surface courbe est telle qu'une entrée de l'orifice est située en entier dans la surface courbe.

Un mode préférentiel de réalisation de l'invention prévoit que la surface courbe est à courbure progressive.

Un mode préférentiel de réalisation de l'invention prévoit qu'en position de repos, l'orifice du piston est au plus partiellement en vis à vis du conduit d'alimentation du corps du maître cylindre.

Un mode préférentiel de réalisation de l'invention prévoit que la paroi inclinée est en vis à vis d'une partie du corps de maître cylindre, ladite partie formant une paroi du conduit d'alimentation.

Un mode préférentiel de réalisation de l'invention prévoit qu'un écart est présent entre la partie du corps du maître cylindre en vis à vis de la paroi inclinée en position de repos.

Un mode préférentiel de réalisation de l'invention prévoit qu'en toute position de travail, la lèvre intérieure est sensiblement parallèle à la paroi inclinée.

Un mode préférentiel de réalisation de l'invention prévoit que lorsque le maître cylindre est au travail, la lèvre intérieure est appuyée sur toute sa surface contre la paroi inclinée.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue en coupe d'un maître cylindre tandem traditionnel.
- Figure 2 : Une vue en coupe partiel d'un maître cylindre selon l'invention.

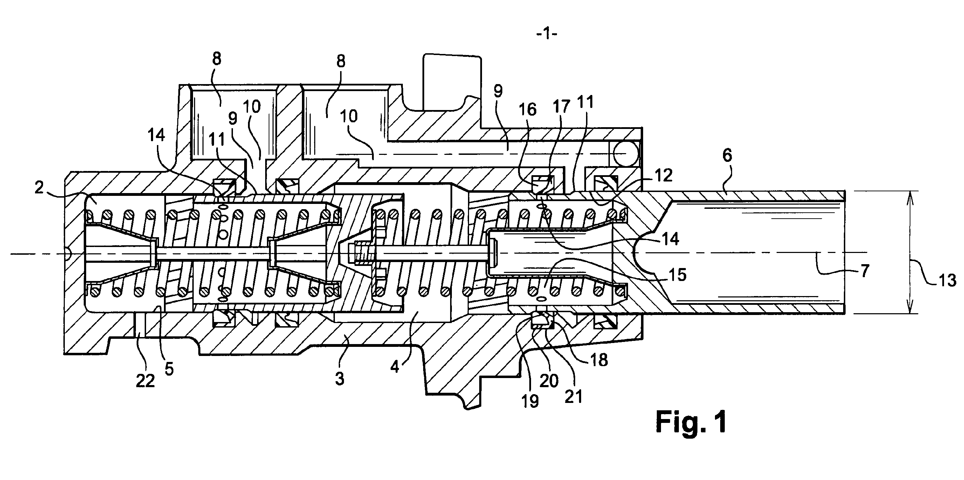

La figure 1 représente une vue en coupe d'un maître cylindre tandem traditionnel. Il est évident que l'invention peut aussi s'appliquer dans le cas d'un maître cylindre simple.

Un maître cylindre 1 de dispositif de freinage comporte, depuis une pédale de frein jusqu'à un fond 2 du maître cylindre 1, un corps 3 de maître cylindre. Le corps 3 de maître cylindre comporte un volume interne dans lequel se situe une chambre de pression 4. La chambre de pression 4 forme un alésage 5 formant le volume interne. Un piston 6 est situé dans l'alésage 5. Un tel piston 6 est monté coulissant dans l'alésage 5. Le coulissement du piston 6 se fait sur un axe 7 de déplacement.

Un réservoir 8 de fluide hydraulique communique avec la chambre de pression 4. Cette communication se fait par l'intermédiaire d'un conduit d'alimentation 9. Un tel conduit d'alimentation 9 présente une entrée de conduit 10 située dans le réservoir 8. Le conduit d'alimentation 9 comporte une sortie de conduit 11 située sur une paroi interne 12 de l'alésage 5. Le piston 6 est situé dans l'alésage en vis à vis de la sortie de conduit 11. L'écart entre la paroi interne 12 de l'alésage 5 et un diamètre externe 13 du piston 6 est tel qu'il ne permet pas un débit suffisant pour remplir la chambre de pression 4 correctement. Un orifice 14 est présent dans le piston 6. Un tel orifice 14 permet la circulation du fluide hydraulique depuis la sortie de conduit 11 jusqu'à la chambre de pression via une partie interne 15 du piston 6.

Une gorge 16 est réalisée dans l'alésage 5. La gorge 16 est située en vis à vis du piston 6. Une coupelle d'étanchéité 17 est logée partiellement dans la gorge. La coupelle d'étanchéité 17 a un profil en coupe en forme de U. Typiquement, la coupelle 17 comporte une base 18, une lèvre intérieure 19 et une lèvre extérieure 20. La base 18 de la coupelle 17 représente le bas du profil en U. Les lèvres 19 et 20 de la coupelle 17 représentent les branches du profil en U. La lèvre intérieure 19 est en contact avec le piston 6. Le contact entre le piston 6 et la lèvre intérieure 19 est étanche. La lèvre extérieure 20 est en contact avec un fond 21 de la gorge 16. Le contact entre la lèvre extérieure 20 et le fond 21 de la gorge 16 est étanche.

Lors d'un freinage, le piston 6 se déplace dans l'alésage 5. Un tel déplacement s'effectue suivant l'axe de déplacement 7. Lors de ce déplacement, l'orifice 14 se déplace dans l'alésage 5. Le déplacement de l'orifice 14 dans l'alésage 5 ferme la communication entre le conduit d'alimentation 9 et ledit orifice 14. En effet, le conduit d'alimentation 9 et l'orifice 14 n'étant plus en vis à vis suite au déplacement du piston 6, le fluide hydraulique ne peut circuler avec un débit suffisant entre le diamètre extérieur 13 du piston 6 et la paroi interne 12 de l'alésage 5. Cependant, cette fermeture de la communication n'est pas étanche. L'étanchéité de la fermeture de la communication entre l'orifice 14 et le conduit d'alimentation 9 n'est obtenue que lorsque la coupelle 17 est soit en vis à vis dudit orifice 14 soit lorsque la coupelle 17 est plus proche du conduit d'alimentation 9 que l'orifice 14 en contact étanche avec le piston 6, typiquement lorsque la coupelle 17 est située entre l'orifice 14 et le conduits d'alimentation 9. Si la communication entre l'orifice 14 et le conduit d'alimentation 9 est coupée de manière étanche, l'avancée du piston 6 dans l'alésage 5 fait monter la pression dans la chambre de pression 4. Cette montée en pression dans la chambre de pression 4 fait évacuer le fluide hydraulique par une sortie 22 d'alimentation d'un circuit hydraulique. Ladite sortie 22 d'alimentation d'un circuit hydraulique est située dans le fond 2 du maître cylindre.

Le déplacement du piston 6 de sa position de repos, c'est à dire sans freinage, à une position de travail, c'est à dire sa position durant le freinage, permettant de faire monter la pression dans la chambre de pression 4 est appelé une course morte 23. Typiquement la course morte 23 correspond à la course du piston 6 de sa position de repos à la position pour laquelle la communication entre le conduit d'alimentation 9 et l'orifice 14 est coupée de manière étanche.

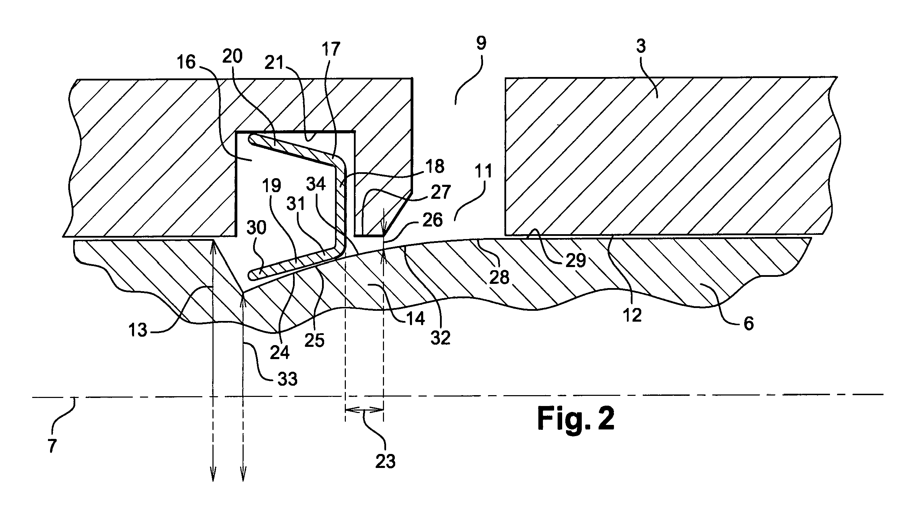

La figure 2 représente une vue en coupe partielle d'un maître cylindre selon l'invention.

Afin de réduire cette course morte, un dispositif prévoit que le piston 6 comporte une partie tronconique 24. La partie tronconique 24 du piston 6 est formée par une paroi inclinée 25 par rapport à l'axe 7 de déplacement du piston 6. L'orifice 14 est situé en entier sur cette paroi inclinée 25. La paroi inclinée 25 est en vis à vis, au moins partiellement, du conduit d'alimentation 9. Ce vis à vis partiel assure un écart 26 entre la paroi inclinée 25 et une paroi 27 de l'alésage formant le conduit d'alimentation 9. L'écart 26 assure un passage pour le fluide hydraulique suffisant pour remplir la chambre de pression 4 et ce même si l'orifice 14 n'est pas ou peu en vis à vis du conduit d'alimentation 9.

Une telle paroi inclinée 25 permet de placer l'orifice 14 plus proche de la coupelle 17 tout en conservant une alimentation de la chambre de pression 4 satisfaisante. L'orifice 14 étant plus proche de la coupelle 17, la distance a parcourir pour le piston 6 pour fermer la communication entre le conduit d'alimentation 9 et l'orifice 14 de manière étanche à l'aide de la coupelle 17 est réduite.

Cependant une telle paroi inclinée peut créer une rupture de la course de la coupelle 17 sur le piston. Typiquement, une jonction 28 entre la paroi inclinée 25 et une paroi extérieure 29 du piston 6 est telle que la coupelle 17 n'est que partiellement en contact avec le piston 6. La paroi extérieure 29 du piston 6 est formée par la paroi du piston 6 en vis à vis du corps du maître cylindre 3 en périphérie du diamètre 13 du piston 6. Typiquement, la paroi inclinée 25 est telle que tout point de ladite paroi inclinée 25 est plus proche de l'axe 7 de déplacement que tout point de la paroi extérieure 29 du piston 6.

Lorsque la lèvre intérieure 19 est appuyée sur la jonction 28, une première partie 30 de la lèvre intérieure 19 est appuyée sur la paroi inclinée 25, une deuxième partie 31 de la lèvre intérieure 19 est en vis à vis de la paroi extérieure 29 du piston 6. Le contact entre la lèvre intérieure 19 et le piston n'est alors que partiel, la rigidité de la lèvre intérieure 19 pouvant empêcher un contact total à cause de la rupture d'angle crée par la jonction 28. Ce contact partiel ne permet pas de garantir une étanchéité parfaite. De même, si la deuxième partie 31 de la lèvre intérieure 19 est en contact avec la paroi extérieure 29 du piston 6, un décollement de la première partie 30 de la lèvre intérieure 19 peut avoir lieu. Un tel décollement empêche le contact étanche entre la première partie 30 de la lèvre intérieure 19 et la paroi inclinée 25. La lèvre intérieure 19 n'est qu'en contact partiel avec le piston 6. Ce contact partiel ne permet pas de garantir l'étanchéité parfaite du contact entre la lèvre intérieure 19 et le piston 6.

Pour assurer un contact entre la lèvre intérieure 19 et le piston parfaitement étanche malgré la présence de la paroi inclinée 25, le dispositif selon l'invention prévoit que ladite paroi inclinée 25 forme une surface courbe convexe 32. La surface courbe convexe 32 est alors incurvée depuis un diamètre extérieur 13 du piston 6, ledit diamètre extérieur 13 formant la paroi extérieure 29 du piston 6, jusqu'à un diamètre 33 de la paroi inclinée 25. Le diamètre 33 de la surface courbe 32 est inférieur au diamètre externe 13 du piston 6 en tout point de la surface courbe 32. La surface courbe 32 est telle qu'une entrée 34 de l'orifice 14 est située en entier dans ladite surface courbe 32. La courbure convexe de la surface courbe 32 assure un contact total et donc parfaitement étanche entre la coupelle 17 et le piston 6. La courbure convexe de la surface courbe 32 évite la création d'un rupture d'angle d'inclinaison dans la zone de jonction 28. L'absence de rupture au niveau de la jonction 28 évite un décollement de la lèvre intérieure 19 lorsque ladite lèvre intérieure est en contact avec la zone de jonction 28. La coupelle 17 épouse alors la surface courbe 32.

Dans un mode préférentiel de réalisation de l'invention, la courbure de la surface courbe 32 peut être progressive. Cette courbure progressive réduit au maximum la rupture de la jonction 28. La lèvre intérieure 19 reste en contact parfaitement étanche avec le piston 6.

Dans un mode préférentiel de réalisation de l'invention, en position de repos, l'orifice 14 du piston 6 est au plus partiellement en vis à vis du conduit d'alimentation 9. Le décalage, suivant un axe perpendiculaire à l'axe 7 de déplacement du piston 6, entre le conduit d'alimentation 9 et l'orifice 14 permet de placer l'orifice 14 plus proche de la coupelle 17 en position de repos. Cette localisation de l'orifice 14 proche de la coupelle 17 réduit la course morte 23. Le débit de fluide hydraulique permettant de remplir la chambre de pression 4 est assuré par l'écart 26 entre la surface courbe 32 et la paroi 27 de l'alésage 5. Typiquement, la paroi inclinée est en vis à vis suivant un axe perpendiculaire a l'axe 7 de déplacement du piston 6, de la paroi 27 interne de l'alésage 5 délimitant un paroi du conduit d'alimentation 9. La surface courbe inclinée coopère donc avec la coupelle 17 de telle sorte qu'en toute position de travail, c'est à dire quand le piston 6 s'est déplacé dans l'alésage 5, la lèvre intérieure est sensiblement parallèle à la paroi inclinée 25. De même, lorsque le maître cylindre est au travail, la lèvre intérieure est appuyée sur toute sa surface en vis à vis de la paroi inclinée contre ladite paroi inclinée.

Ainsi selon l'invention, lorsque le maître cylindre 1 est au travail, la lèvre intérieure 19 est appuyée sur toute sa surface contre la paroi inclinée 25. Pour cela, la paroi inclinée 25 atteint le diamètre extérieur 13 du piston 6 sans rupture de la pente.

## Revendications

1. Maître cylindre de frein comportant, depuis une pédale de frein jusqu'à un fond (2) du maître cylindre,
- un corps (3) de maître cylindre, ledit corps de maître cylindre comportant une chambre (4) située dans un alésage (5) du corps du maître cylindre,
- un piston (6) coulissant dans l'alésage sur un axe (7) de déplacement du piston,
- un réservoir (8) de liquide hydraulique alimentant la chambre par l'intermédiaire d'un orifice (14) dans le piston et d'un conduit d'alimentation (9) dans le corps de maître cylindre,
- une coupelle (17) d'étanchéité,
- la coupelle d'étanchéité étant en contact par une lèvre intérieure (19) avec la périphérie du piston, et par une lèvre extérieure (20) avec le corps du maître cylindre,
- ledit orifice étant soit en vis à vis de ladite lèvre intérieure soit plus éloigné, selon une position en déplacement du piston sur un axe de déplacement dudit piston, du conduit d'alimentation que la lèvre intérieure lors d'un freinage,
- le piston comporte une partie tronconique (24),
- la partie tronconique du piston est formée par une paroi inclinée (25) par rapport à un axe de déplacement du piston,
- ladite paroi inclinée forme une surface courbe convexe incurvée (32) depuis un diamètre extérieur du piston jusqu'à un diamètre (33) inférieur au diamètre externe du piston, est
- ladite **caractérisé en ce que** surface courbe est telle qu'une entrée (34) de l'orifice est située en entier dans la surface courbe.

2. Maître cylindre selon la revendication 1 **caractérisée en ce que** la surface courbe est à courbure progressive.

3. Maître cylindre selon l'une des revendications 1 à 2 **caractérisé en ce qu'**en position de repos, l'orifice du piston est au plus partiellement en vis à vis du conduit d'alimentation du corps du maître cylindre.

4. Maître cylindre selon l'une des revendications 1 à 3 **caractérisé en ce que** la paroi inclinée est en vis à vis d'une partie (27) du corps de maître cylindre, ladite partie formant une paroi du conduit d'alimentation.

5. Maître cylindre selon la revendication 4 **caractérisé en ce qu'**un écart (26) est présent entre la partie du corps du maître cylindre en vis à vis de la paroi inclinée en position de repos.

6. Maître cylindre selon l'une des revendications 1 à 5 **caractérisé en ce qu'**en toute position de travail, la lèvre intérieure est sensiblement parallèle à la paroi inclinée.

7. Maître cylindre selon l'une des revendications 1 à 6 **caractérisé en ce que** lorsque le maître cylindre est au travail, la lèvre intérieure est appuyée sur toute sa surface en vis à vis de la paroi inclinée contre ladite paroi inclinée.

8. Maître cylindre selon l'une des revendications 1 à 7 **caractérisé en ce que** la paroi inclinée atteint le diamètre extérieur du piston sans rupture de la pente.

## Claims

1. Brake master cylinder comprising, from a brake pedal to a bottom (2) of the master cylinder,
- a master cylinder body (3), said master cylinder body comprising a chamber (4) situated in a bore (5) of the body of the master cylinder,
- a piston (6) sliding in the bore on an axis (7) of displacement of the piston,
- a reservoir (8) of hydraulic liquid supplying the chamber via an orifice (14) in the piston and a supply duct (9) in the master cylinder body,
- a sealing cup (17),
- the sealing cup being in contact via an inner lip (19) with the periphery of the piston, and via an outer lip (20) with the body of the master cylinder,
- said orifice being either facing said inner lip or more distant, depending on the position in displacement of the piston on an axis of displacement of said piston, from the supply duct than the inner lip during a braking action,
- the piston comprises a frustoconical portion (24),
- the frustoconical portion of the piston is formed by an inclined wall (25) relative to an axis of displacement of the piston,
- said inclined wall forms an incurved convex rounded surface (32) from an external diameter of the piston to a diameter (33) smaller than the external diameter of the piston,
**characterized in that**
- said rounded surface is such that an entrance (34) of the orifice is wholly situated in the rounded surface.

2. Master cylinder according to Claim 1, **characterized in that** the rounded surface has a progressive curvature.

3. Master cylinder according to one of Claims 1 or 2, **characterized in that**, in the rest position, the orifice of the piston is at most partially facing the supply duct of the body of the master cylinder.

4. Master cylinder according to one of Claims 1 to 3, **characterized in that** the inclined wall is facing a portion (27) of the master cylinder body, said portion forming a wall of the supply duct.

5. Master cylinder according to Claim 4, **characterized in that** a gap (26) is present between the portion of the body of the master cylinder facing the inclined wall in the rest position.

6. Master cylinder according to one of Claims 1 to 5, **characterized in that** in any working position, the inner lip is substantially parallel to the inclined wall.

7. Master cylinder according to one of Claims 1 to 6, **characterized in that**, when the master cylinder is at work, the inner lip is pressed over its whole surface facing the inclined wall against said inclined wall.

8. Master cylinder according to one of Claims 1 to 7, **characterized in that** the inclined wall reaches the outer diameter of the piston without a change in slope.

## Patentansprüche

1. Hauptbremszylinder, der ausgehend von einem Bremspedal bis zu einem Boden (2) des Hauptzylinders Folgendes aufweist:
- einen Hauptzylinderkörper (3), wobei der Hauptzylinderkörper eine Kammer (4) aufweist, die sich in einer Bohrung (5) des Hauptzylinderkörpers befindet,
- einen Kolben (6), der in der Bohrung auf einer Verschiebungsachse (7) des Kolbens gleitet,
- einen Hydraulikflüssigkeitsbehälter (8), der die Kammer über eine Öffnung (14) im Kolben und eine Versorgungsleitung (9) im Hauptzylinderkörper versorgt,
- eine Dichtungsschale (17),
- wobei die Dichtungsschale über eine Innenlippe (19) mit dem Umfang des Kolbens und über eine Außenlippe (20) mit dem Hauptzylinderkörper in Kontakt steht,
- wobei die Öffnung je nach einer Stellung des sich verschiebenden Kolbens auf einer Verschiebungsachse des Kolbens entweder der Innenlippe gegenüberliegt oder weiter von der Versorgungsleitung entfernt ist als die Innenlippe bei einer Bremsung,
- wobei der Kolben einen kegelstumpfförmigen Abschnitt (24) aufweist,
- der kegelstumpfförmige Abschnitt des Kolbens durch eine zu einer Verschiebungsachse des Kolbens geneigte Wand (25) gebildet ist,
wobei die geneigte Wand eine bogenförmig gekrümmte konvexe Fläche (32) ausgehend von einem Außendurchmesser des Kolbens bis zu einem Durchmesser (33), der kleiner ist als der Außendurchmesser des Kolbens ist, bildet,
**dadurch gekennzeichnet, dass**
die gekrümmte Fläche derart ist, dass ein Eingang (34) der Öffnung sich im Ganzen in der gekrümmten Fläche befindet.

2. Hauptbremszylinder nach Anspruch 1, **dadurch gekennzeichnet, dass** die gekrümmte Fläche eine fortschreitende Krümmung aufweist.

3. Hauptbremszylinder nach einem der Ansprüche 1 bis 2, **dadurch gekennzeichnet, dass** in der Ruhestellung die Öffnung des Kolbens höchstens teilweise der Leitung zur Versorgung des Hauptzylinderkörper gegenüberliegt.

4. Hauptbremszylinder nach einem der Ansprüche 1 bis 3, **dadurch gekennzeichnet, dass** die geneigte Wand einem Teil (27) des Hauptzylinderkörper gegenüberliegt, wobei der Teil eine Wand der Versorgungsleitung bildet.

5. Hauptbremszylinder nach Anspruch 4, **dadurch gekennzeichnet, dass** sich ein Abstand (26) zwischen dem Teil des Hauptzylinderkörpers, der der geneigten Wand in der Ruhestellung gegenüberliegt, befindet.

6. Hauptbremszylinder nach einem der Ansprüche 1 bis 5, **dadurch gekennzeichnet, dass** in jeder Arbeitsstellung die Innenlippe im Wesentlichen parallel zur geneigten Wand ist.

7. Hauptbremszylinder nach einem der Ansprüche 1 bis 6, **dadurch gekennzeichnet, dass**, wenn der Hauptzylinder arbeitet, die Innenlippe mit ihrer ganzen Fläche gegenüber der geneigten Wand gegen die geneigte Wand anliegt.

8. Hauptbremszylinder nach einem der Ansprüche 1 bis 7, **dadurch gekennzeichnet, dass** die geneigte Wand den Außendurchmesser des Kolbens ohne Unterbrechung der Steigung erreicht.
